# EUROPÄISCHE PATENTSCHRIFT

(11) **EP 2 674 407 B1**
(45) Veröffentlichungstag und Bekanntmachung des Hinweises auf die Patenterteilung: **27.08.2014**
(21) Anmeldenummer: 12172161.7
(22) Anmeldetag: 15.06.2012
(51) Int. Cl.: C04B 35/626, C04B 35/043

(54) **Feuerfester keramischer Versatz und daraus gebildeter Stein**
Refractory ceramic formulation and brick formed therefrom
Remblai céramique refractaire et brique formée ainsi

(43) Veröffentlichungstag der Anmeldung: 18.12.2013
(73) Patentinhaber: Refractory Intellectual Property GmbH & Co. KG, 1100 Wien (AT)
(72) Erfinder: Harmuth, Harald, 8700 Leoben (AT); Gschiel, Sabine, 8700 Leoben (AT)
(74) Vertreter: Berkenbrink, Kai-Oliver

(56) Entgegenhaltungen:
- EP-A2- 0 370 176
- WO-A1-84/00158
- CN-A- 1 654 426
- DE-A1- 3 329 250
- DE-A1- 4 442 282
- JP-A- 2 164 779
- JP-A- 2 274 370
- KR-A- 20100 101 425

## Beschreibung

Die Erfindung betrifft einen feuerfesten keramischen Versatz sowie einen daraus gebildeten feuerfesten keramischen Stein.

Feuerfeste keramische Produkte lassen sich in unterschiedliche Kategorien einteilen, beispielsweise in basische und nicht basische Produkte. Die Erfindung betrifft nur basische Produkte, und zwar einen Versatz und einen Stein, dessen basisches Grundmaterial aus Sintermagnesia und/oder Schmelzmagnesia besteht.

KR 2010 0101425 A offenbart einen feuerfesten Versatz zur Herstellung eines koghlenstoffgebundenen Erzeugnisses, umfassend 40-90 M.-% MgO, 9-50 M.-% SiC und 1-10 M.-% AlN; das SiC kann in einer Körnung < 1 mm und die übrigen Komponenten in einer Körnung > 1 mm vorliegen. CN 1 654 426 A offenbart ein feuerfestes Material, das 50-90 M.-% MgO, 10-15 M.-% SiC und 3-8 M.-% Silicapulver umfasst; MgO kann in einer Körnung von 4-10 µm sowie in einer Körnung von 8-12 mm vorliegen, und SiC kann in einer Körnung von 2-120 µm sowie in einer Körnung von 2-15 mm vorliegen, wobei das gröbere Korn dabei in Anteilen von 30-80 M.-% und das feinere Korn in Anteilen von 20-70 M.-% vorhanden sein kann. EP 0 370 176 A2 offenbart ein feuerfestes Produkt, umfassend MgO und SiC; MgO liegt in einer Körnung von 0,5-100 µm und SiC in einer Körnung < 1 µm vor. WO 84/00158 Al offenbart ein feuerfestes Produkt, das 60-95 M.-% MgO, 3-20 M.-% C und 2-15 M.-% SiC aufweist; das SiC kann dabei zu wenigstens 85 % in einer Körnung im Bereich von 2-50 µm vorliegen.

Aus der DE 44 03 869 C2 und der DE 198 59 372 C1 sind gattungsgemäße Versätze und Steine bekannt. Neben dem basischen Grundmaterial bestehen die bekannten Produkte aus Spinellen (Herzynit, Galaxit, Jacobsit).

Dabei wurde festgestellt, dass durch die Kombination des basischen Grundmaterials mit den genannten Spinellen vorteilhafte mechanische Eigenschaften des gebrannten Produktes erreicht werden können. Insbesondere wird die Duktilität (Sprödigkeit) des gebrannten Formkörpers verbessert (herabgesetzt), teilweise wird auch die Resistenz insbesondere gegenüber einem Angriff von Alkalien verbessert.

Es wird erwähnt, dass die Reaktions- und Sintermechanismen beim Brand der entsprechenden Teile noch nicht vollständig geklärt sind, verschiedene Erkenntnisse aber darauf hindeuten, dass keine vollständige, dichte Versinterung zwischen den einzelnen Versatzkomponenten stattfindet, so dass auch das gebrannte Teil eine gewisse "Elastizität" (Flexibilität) aufweist. Mit anderen Worten: die Versatzkomponenten treten zwar beim Brennen in eine physikalischchemische Wechselwirkung, das Produkt ist jedoch weniger spröde als die einzelnen Versatzkomponenten und wird insgesamt "elastischer".

Wenngleich sich die vorgenannten feuerfesten Produkte seit vielen Jahren in der Industrie bewährt haben und beispielsweise zur Auskleidung von Zement-Drehrohröfen eingesetzt werden, besteht der Wunsch nach weiteren Verbesserungen insbesondere hinsichtlich der thermischen Beständigkeit der gebrannten Produkte. Beispielsweise beträgt der invariante Punkt im System Dicalciumsilikat-Calciumaluminat-Spinell-Periklas nur ca. 1.325° C.

Der Erfindung liegt die Aufgabe zugrunde, einen basischen feuerfesten keramischen Versatz anzubieten, aus dem sich feuerfeste Formteile herstellen lassen, die zusätzlich zu einer vorteilhaften Gefügeelastizität eine hohe Feuerfestigkeit aufweisen, welche durch einen invarianten Punkt über 1.400° C bestimmt wird. Vorzugsweise soll das gebrannte Produkt außerdem eine besonders gute Korrosionsbeständigkeit aufweisen.

Die Erfindung verlässt den im Stand der Technik vorgezeichneten Weg, Spinelle in Kombination mit einem Periklas-Grundmaterial einzusetzen. Es wurde festegestellt, dass der Al₂O₃-Gehalt der Spinelle wesentlich für die Verringerung der thermischen Beständigkeit der gebrannten Produkte ist. Dies gilt insbesondere in Kombination mit der Versatzkomponente CaO. Der CaO-Gehalt des Gesamtversatzes kann zwar durch Verwendung calciumarmer Grundmaterialien reduziert werden. Das Problem bleibt jedoch bestehen, wenn bei der Anwendung Calciumoxid wieder zugeführt wird. Dies ist beispielsweise in Drehrohröfen zur Herstellung von Zementklinker der Fall.

In umfangreichen Versuchen wurde festgestellt, dass diese Nachteile durch eine völlig andere Versatzkomponente gelöst werden können, nämlich eine Versatzkomponente aus der Gruppe: Siliziumcarbid, Siliziumoxicarbid, Siliziumoxicarbonitrid, Siliziumnitrid.

Wird aus dem Versatz, nach Zugabe eines üblichen Bindemittels wie Ligninsulfonat (beispielsweise in einer Menge bis 4 M.-%, bezogen auf den Gesamtversatz) ein Stein gepresst und gebrannt (insbesondere im Temperaturbereich 1.400° C bis 1.600°C), kommt es bei einem erfindungsgemäßen Produkt nur zu partiellen Sinterbrücken zwischen dem basischen (MgO) Grundmaterial und dem körnigen Zuschlag, wobei sich insbesondere folgende Mineralphasen bilden: MgSiO₃, Mg₂SiO₄, SiO₂. Dabei entsteht SiO₂ durch die Oxidation von SiC während eines (oxidierenden) Pyroprozesses. In den meisten Fällen reagiert SiO₂ mit MgO und bildet Enstatit. Daran angrenzend bildet sich Forsterit, welcher eine direkte Bindung zu dem basischen Grundmaterial aufbaut, da Enstatit neben MgO nicht stabil ist.

Es konnte in Versuchen beobachtet werden, dass maximal die Hälfte der Oberfläche des körnigen Zuschlages mit dem umgebenden feuerfesten basischen Grundmaterial versintert ist. Vielfach liegt der körnige Zuschlag nach dem Brand sogar lose in der basischen Matrix vor, das heißt, es gibt zwischen einzelnen Zuschlagkörner und dem basischen Matrixmaterial gar keine festen Verbindungen. In der direkten Umgebung der Zuschlagkörner kann neben MgO auch Forsterit auftreten. Der Umfang der Versinterung des körnigen Zuschlags mit dem umgebenden feuerfesten basischen Grundmaterial konnte durch eine mikroskopische Anschliffuntersuchung festgestellt werden; dabei wurde festgestellt, dass die Kornperipherie maximal über die Hälfte ihrer Länge mit dem umgebenden basischen Grundmaterial versintert ist.

Insoweit unterscheidet sich das Gefüge eines erfindungsgemäßen feuerfesten keramischen Produktes von einem Gefügebild eines Steins gemäß Stand der Technik, der Spinell enthält. Mit dem neuen Produkt werden mindestens die Duktilitäts-Kennwerte erreicht, die die bekannten Spinell-Produkte aufweisen.

Im Verhältnis zu diesem Stand der Technik zeichnet sich das erfindungsgemäße Produkt durch einen deutlich erhöhten invarianten Punkt aus, der regelmäßig mindestens 100° C, oft mehr als 200° C über dem der Produkte mit Herzynit und/oder Galaxit und/oder Jacobsit liegt. Entsprechend hoch ist die Feuerfestigkeit.

In der allgemeinsten Ausführungsform umfasst die Erfindung einen feuerfesten keramischen Versatz folgender Zusammensetzung:
- 75 bis 98 M.-% mindestens eines basischen Grundmaterials aus der Gruppe: Sintermagnesia, Schmelzmagnesia,
- 2 bis 25 M.-% mindestens eines körnigen Zuschlags aus der Gruppe: Siliziumcarbid, Siliziumnitrid, Siliziumoxicarbid, Siliziumoxicarbonitrid,
- maximal 5 M.-% sonstige Bestandteile
- wobei sich die Masseangaben jeweils auf den Gesamtversatz beziehen, und
- wobei der Versatz die weiteren Merkmale nach Anspruch 1 aufweist.

Die vorstehend genannten Eigenschaften lassen sich durch folgende Variationen optimieren, die einzeln und in Kombination miteinander verwirklicht werden können, sofern dies nicht ausdrücklich ausgeschlossen wird:
- Verwendung eines basischen Grundmaterials mit einem Anteil > 35 M.-% (bezogen auf den Gesamtversatz) in einer Kornfraktion > 1 mm,
- Einsatz des körnigen Zuschlags in einem Kornspektrum > 0,5 mm,
- Reduzierung des Anteils des körnigen Zuschlags am Gesamtversatz auf eine Menge von 2 bis 10 M.-%,
- Auswahl eines basischen Grundmaterials, das selbst zu mindestens 95 M.-% aus MgO besteht, wobei dieser Anteil vorzugsweise noch höher liegt, beispielsweise über 97 M.-% oder über 98,5 M.-%,
- Abstimmung der Korngrößen des Zuschlags und des basischen Grundmaterials derart, dass der d₉₀-Wert des basischen körnigen Grundmaterials (also basisches Grundmaterial ohne die Mehlfraktion < 125 µm) über dem d₉₀-Wert des körnigen Zuschlags liegt,
- Verwendung eines basischen Grundmaterials mit einem Eisengehalt, gemessen als Fe₂O₃, von weniger als 0,6 M.-%, bezogen auf das basische Grundmaterial, wobei dieser Anteil so gering wie möglich sein sollte, beispielsweise < 0,3 M.-%,
- Auswahl der basischen Grundkomponente dahingehend, dass diese kein oder nur wenig (jeweils < 0,3 M.-%) Chromoxid und/oder Aluminiumoxid, bezogen auf den Gesamtversatz, enthält,
- auch der Zuschlagstoff sollte möglichst rein sein, um die gewünschten Effekte optimal zu erreichen, wobei Fremdbestandteile des Zuschlages insbesondere auf < 5 M.-%, bezogen auf den Masseanteil des Zuschlags im Gesamtversatz, günstig sind.

Der erfindungsgemäße Versatz umfasst also insbesondere zwei Versatzkomponenten (basisches Grundmaterial, körniger Zuschlag) in unterschiedlichen Kornfraktionen, wobei es sich als günstig herausgestellt hat, wenn das basische Grundmaterial einen Anteil an einer Mehlfraktion (< 125 µm) aufweist, während der körnige Zuschlag ganz überwiegend (bevorzugt wenigstens 90 %) in einer Kornfraktion außerhalb (oberhalb, also in einer gröberen Körnung) dieses Mehlbereiches vorliegen sollte.

Abgesehen von kleinen Anteilen an Verunreinigungen, die überwiegend durch die verwendeten Rohstoffe verursacht sind, enthält das erfindungsgemäße Produkt (neben dem Carbid und/oder Nitrid des Zuschlags) lediglich die Oxide CaO, MgO und SiO₂. Das Verhältnis CaO/SiO₂ für die verwendete basische Komponente ist entsprechend hoch und beträgt bevorzugt mindestens 2, insbesondere > 3, > 4 oder > 5. Damit kann ein invarianter Punkt von deutlich über 1.700° C erzielt werden.

Für das hohe CaO/SiO₂-Verhältnis ist auch die carbidische beziehungsweise nitridische Bindung des Siliziums verantwortlich. Diese hat auch Vorteile hinsichtlich Korrosionsbeanspruchung des gebrannten Produktes.

Bei der Verwendung eines Siliziumcarbids kann es bei einem oxidierend geführten Pyroprozess zu einer teilweisen Oxidation des Siliziumcarbids kommen, was zu einem verringerten Verhältnis CaO/SiO₂ führt. Auf diese Weise würde eine verstärkte Versinterung verursacht, was prinzipiell unerwünscht ist, weil damit die Sprödigkeit erhöht würde.

Insoweit ermöglicht der erfindungsgemäße Versatz jedoch die Einstellung einer bestimmten Duktilität des gebrannten Produktes durch Einstellung der Ofenatmosphäre beim Brand.

Schließlich ermöglicht die Erfindung eine Tränkung der gebrannten Produkte mit Kohlenstoff, beispielsweise Pech. Dies ist bei Produkten gemäß Stand der Technik (mit Spinellzusätzen in Form von Herzynit, Jacobsit oder Galaxit) nicht möglich, weil die Spinelle Eisen- oder Manganoxide enthalten, welche bei Anwendungstemperaturen durch das Tränkungsmaterial reduziert würden. Dadurch würde das Tränkungsmaterial oxidieren und damit zumindest teilweise unwirksam. Das erfindungsgemäße Produkt ist demgegenüber mit einer solchen Kohlenstoff-Tränkung kompatibel, zumal es in wesentlichen Ausführungsformen bereits eine carbidische Substanz (den körnigen Zuschlag) enthält.

Zur Herstellung des erfindungsgemäßen keramischen Formteils wird dem Versatz ein Bindemittel zugegeben. Das Bindemittel kann dem Versatz beispielsweise in Anteilen im Bereich von 1 bis 4 M.-% zugegeben werden, insbesondere auch in Anteilen im Bereich von 2 bis 3 M.%, jeweils bezogen auf 100 M.-% des Gesamtversatzes (die Anteile an Bindemittel addieren sich also zu 100 M.-% des Versatzes hinzu).

Das erfindungsgemäße feuerfeste keramische Formteil ist in seiner allgemeinsten Ausführungsform durch folgende Merkmale gekennzeichnet, jeweils bestimmt bei Raumtemperatur:
- hergestellt aus einem Versatz der genannten Art,
- anschließende Verpressung zu einem Formteil,
- anschließender Brand bei Temperaturen zwischen 1.400° C und 1.600° C,
- wobei der körnige Zuschlag maximal zur Hälfte mit dem umgebenden basischen Grundmaterial versintert.

Der Stein kann dann folgende Eigenschaftsmerkmale besitzen:
- Elastizitätsmodul: < 60 GPa
- Brucharbeit: > 200 Nm
- nominelle Kerbzugfestigkeit: < 9 MPa
- charakteristische Länge: > 250 mm
- invarianter Punkt: > 1.700° C.

Der Elastizitätsmodul (E-Modul) kann insbesondere bestimmt werden gemäß den Angaben in der folgenden Literaturstelle: G. Robben, B. Bollen, A. Brebels, J van Humbeeck, O. van der Biest: "Impulse excitation apparatus to measure resonant frequencies, elastic module and internal friction at room and high temperature", Review of Scientific Instruments, Vol. 68, pp. 4511-4515 (1997).

Die Brucharbeit, die nominelle Kerbzugfestigkeit sowie die charakteristische Länge kann insbesondere bestimmt werden gemäß den Angaben in der folgenden Literaturstelle: Harmuth H., Manhart Ch., Auer Th., Gruber D.: "Fracture Mechanical Characterisation of Refractories and Application for Assessment and Simulation of the Thermal Shock Behaviour", CFI Ceramic Forum International, Vol. 84, Nr. 9, pp. E80 - E86 (2007).

Der invariante Punkt kann insbesondere ermittelt werden aus dem Phasensystem der in dem Stein vorhandenen Mineralphasen.

Die Steine lassen sich bevorzugt in Industrieöfen wie Drehrohröfen für die Zementklinker-Herstellung, aber auch in der Stahlindustrie einsetzen.

Weitere Merkmale der Erfindung ergeben sich aus den Merkmalen der Unteransprüche sowie den sonstigen Anmeldungsunterlagen.

Die Erfindung wird nachstehend anhand verschiedener Ausführungsbeispiele näher erläutert.

In der nachfolgenden Tabelle 1 sind vier verschiedene feuerfeste keramische Versätze angegeben, wobei die Versätze S-1, S-2 und S-3 Ausführungsbeispiele erfindungsgemäßer Versätze und Versatz S-0 die Zusammensetzung eines nicht erfindungsgemäßen Vergleichversatzes angibt. Dabei sind sämtliche Angaben zu den Anteilen der Versätze an den jeweiligen Komponenten in Masse-% (M.-%), bezogen auf 100 M.-% des jeweiligen Gesamtversatzes.

**Tabelle 1**

| **Versatzkomponente** | **S-0** | **S-1** | **S-2** | **S-3** |
|---|---|---|---|---|
| Sintermagnesia (Kornfraktion 3 bis 5 mm) | 15,0 | 15,0 | 15,0 | 15,0 |
| Sintermagnesia (Kornfraktion 1 bis < 3 mm) | 40,0 | 37,0 | 36,0 | 34,0 |
| Sintermagnesia (Kornfraktion 0,125 bis < 1 mm) | 15,7 | 13,9 | 13,1 | 12,2 |
| Sintermagnesia (Mehlfraktion < 125 µm) | 29,3 | 29,1 | 28,9 | 28,8 |
| Siliziumcarbid (Kornfraktion 0,5 bis 1,7 mm) | 0 | 5 | 7 | 10 |

Der Herstellungsprozess zur Herstellung eines erfindungsgemäßen Steins mit den Versatzkomponenten gemäß Tabelle 1 war jeweils wie folgt:
- Mischen der Versatzkomponenten mit dem Bindemittel, nämlich 2,5 M.-% flüssiges Ligninsulfonat, bezogen auf 100 M.-% des Gesamtversatzes,
- Pressen von Normalsteinen (230 x 85 x 114 mm) mit einem Pressdruck von 140 MPa,
- Brennen der Steine bei 1.400° C in Luft für 8 Stunden.

Die Daten und Eigenschaftsmerkmale der aus den Versätzen gemäß Tabelle 1 hergestellten Steine sind in Tabelle 2 wiedergegeben. Dabei sind die aus den Versätzen erstellten Steine jeweils mit den Bezeichnungen (S-0, S-1, S-2, S-3) der entsprechenden Versätze angegeben.

Ferner sind in Tabelle 2 zu Vergleichszwecken die Daten und Eigenschaftsmerkmale vier weiterer feuerfester Steine auf Basis eines basischen Grundmaterials dargestellt, die jeweils nicht mit einem erfindungsgemäßen Versatz erstellt sind. Konkret handelt es sich bei den Steinen A-D um folgende Steintypen:
A: Gebrannter Magnesiastein auf Basis Sintermagnesia mit 94 M.-% MgO und 6 M.-% Fe₂O₃.
B: Gebrannter Magnesiastein auf Basis Sintermagnesia mit 97 M.-% MgO, 2 M.-% SiO₂, 0,6 M.-% CaO und 0,4 M.-% Al₂O₃ + Fe₂O₃ + MnO.
C: Gebrannter Magnesia-Spinellstein auf Basis Sintermagnesia mit 89,5 M.-% MgO und 10,5 M.-% Al₂O₃.
D: Gebrannter Magnesia-Hercynitstein auf Basis Sintermagnesia mit 91,8 M.-% MgO, 3,4 M.-% Al₂O₃, 3,8 M.-% Fe₂O₃, 0,7 M.-% CaO und 0,3 M.-%SiO₂.

**Tabelle 2**

| **Eigenschaft** | **S-0** | **S-1*¹** | **S-1*²** | **S-2** | **S-3** | **A** | **B** | **C** | **D** |
|---|---|---|---|---|---|---|---|---|---|
| Elastizitätsmodul E [GPa] | 74,8 | 22,5 | 57,2 | 14,5 | 24,5 | 105 | 110 | 33,8 | 33,7 |
| Brucharbeit G_{f} [N·m⁻¹] | 188,8 | 247,0 | 268,6 | 205,0 | 266,6 | 106 | 129 | 117 | 143 |
| Nominelle Kerbzugfestigkeit σ_{NT}[MPa] | 9,2 | 4,3 | 8,0 | 2,4 | 3,6 | 11,8 | 9,97 | 3,91 | 3,41 |
| Charakteristische Länge (G_{f}*E/ σ_{NT}²) [mm] | 166,1 | 298,2 | 239,7 | 508,1 | 492,4 | 80,2 | 143 | 258 | 415 |

| | | | | | | | | | |
|---|---|---|---|---|---|---|---|---|---|
| *1: Brand bei 1.400°C; *2: Brand bei 1.500°C | | | | | | | | | |

Die verwendete Sintermagnesia bei den Steinen S-0, S-1, S-2 und S-3 hatte einen MgO-Gehalt von > 97 M.-%. Das verwendete Siliziumcarbid hatte einen Reinheitsgrad von ca. 95 M.-%.

Die in der Tabelle genannten Eigenschaftswerte wurden nach folgenden Methoden bestimmt:
- Elastizitätsmodul: Gemäß den Angaben in der oben angegebenen Literaturstelle in "Review of Scientific Instruments" (1997). Im Ausführungsbeispiel wurde der Elastizitätsmodul dabei mit Hilfe eines RFDA (Resonant Frequency and Damping Analyser) der Firma IMCE n.v., Slingerweg 52, B-3600 Genk bestimmt.
- Brucharbeit, Nominelle Kerbzugfestigkeit und Charakteristische Länge: Ermittelt anhand der Durchführung und Auswertung eines Keilspalttestes gemäß der oben angegebene Literaturstelle in "CFI Ceramic Forum International" (2007).

## Patentansprüche

1. Feuerfester keramischer Versatz der Zusammensetzung
a) 75-98 M.-% mindestens eines basischen Grundmaterials aus der Gruppe: Sintermagnesia, Schmelzmagnesia,
b) 2-25 M.-% mindestens eines körnigen Zuschlags aus der Gruppe: Siliziumcarbid, Siliziumnitrid, Siliziumoxicarbid, Siliziumoxicarbonitrid,
c) maximal 5 M.-% sonstige Bestandteile,
jeweils bezogen auf den Gesamtversatz, wobei
d) das basische Grundmaterial zu > 10 bis < 40 M.-% in einer Mehlfraktion < 125 µm vorliegt, bezogen auf den Gesamtversatz und
e) der körnige Zuschlag in einer Kornfraktion > 125 µm und < 2 mm vorliegt.

2. Feuerfester keramischer Versatz nach Anspruch 1, dessen basisches Grundmaterial zu > 35 M.-% in einer Kornfraktion > 1 mm vorliegt, bezogen auf den Gesamtversatz.

3. Feuerfester keramischer Versatz nach Anspruch 1, dessen körniger Zuschlag in einer Kornfraktion > 0,5 mm und < 2 mm vorliegt.

4. Feuerfester keramischer Versatz nach Anspruch 1, dessen körniger Zuschlag in einer Menge von 2-10 M.-%, bezogen auf den Gesamtversatz, vorliegt.

5. Feuerfester keramischer Versatz nach Anspruch 1, dessen basisches Grundmaterial zu mindestens 95 M.-% aus MgO besteht.

6. Feuerfester keramischer Versatz nach Anspruch 1, bei dem der d₉₀-Wert des basischen körnigen Grundmaterials ohne die Mehlfraktion über dem d₉₀-Wert des körnigen Zuschlags liegt.

7. Feuerfester keramischer Versatz nach Anspruch 1, dessen basisches Grundmaterial einen Eisengehalt, gemessen als Fe₂O₃, von weniger als 0,6 M.-% aufweist, bezogen auf das basisches Grundmaterial.

8. Feuerfester keramischer Versatz nach Anspruch 1, der weniger als 0,3 M.-% Aluminiumoxid enthält, bezogen auf den Gesamtversatz.

9. Feuerfester keramischer Versatz nach Anspruch 1, der weniger als 0,3 M.-% Chromoxid enthält, bezogen auf den Gesamtversatz.

10. Feuerfesten keramischer Versatz nach Anspruch 1, dessen körniger Zuschlag maximal 5 M.-% sonstige Bestandteile enthält, bezogen auf den Masseanteil des Zuschlags im Gesamtversatz.

11. Feuerfester keramischer Stein, hergestellt aus einem Versatz gemäß Anspruch 1 nach Verpressen und Brand bei Temperaturen zwischen 1400°C und 1600 °C , bei dem der körnige Zuschlag maximal zur Hälfte mit dem umgebenden basischen Grundmaterial versintert ist.

12. Feuerfester keramischer Stein nach Anspruch 11 mit mindestens einem der folgenden Eigenschaftswerte:
a) Elastizitätsmodul: < 60 GPa
b) Brucharbeit: > 200 N/m
c) nominelle Kerbzugfestigkeit: < 9 MPa
d) charakteristische Länge: > 250 mm
e) Invarianter Punkt: > 1700 °C

## Claims

1. A refractory ceramic batch having the following composition
a) 75 - 98 m. % of at least one basic base material from the group: sintered magnesia, fused magnesia,
b) 2 - 25 m. % of at least one granular aggregate from the group: silicon carbide, silicon nitride, silicon oxycarbide, silicon oxycarbonitride,
c) at most 5 m. % of other constituents,
in each case in relation to the total batch, wherein
d) the basic base material is present in a proportion > 10 to < 40 m. % in a flour fraction < 125 µm, in relation to the total batch, and
e) the granular aggregate is present in a grain fraction > 125 µm and < 2 mm.

2. The refractory ceramic batch according to claim 1, of which the basic base material is present in a proportion > 35 m. % in a grain fraction > 1 mm, in relation to the total batch.

3. The refractory ceramic batch according to claim 1, of which the granular aggregate is present in a grain fraction > 0.5 mm and < 2 mm.

4. The refractory ceramic batch according to claim 1, of which the granular aggregate is present in a quantity of 2 - 10 m. %, in relation to the total batch.

5. The refractory ceramic batch according to claim 1, of which the basic base material consists of MgO in a proportion of at least 95 m. %.

6. The refractory ceramic batch according to claim 1, in which the d₉₀ value of the basic granular base material without the flour fraction is above the d₉₀ value of the granular aggregate.

7. The refractory ceramic batch according to claim 1, of which the basic base material has an iron content, measured as Fe₂O₃, of less than 0.6 m. %, in relation to the basic base material.

8. The refractory ceramic batch according to claim 1, which contains less than 0.3 m. of aluminium oxide, in relation to the total batch.

9. The refractory ceramic batch according to claim 1, which contains less than 0.3 m. % of chromium oxide, in relation to the total batch.

10. The refractory ceramic batch according to claim 1, of which the granular aggregate contains at most 5 m. % of other constituents, in relation to the mass fraction of the aggregate in the total batch.

11. A refractory ceramic brick, produced from a batch according to claim 1 after compaction and firing at temperatures between 1,400 °C and 1,600 °C, in which the granular aggregate is sintered at most by half with the surrounding basic base material.

12. The refractory ceramic brick according to claim 11, having at least one of the following property values:
a) modulus of elasticity: < 60 GPa
b) work of fracture: > 200 N/m
c) nominal notch tensile strength: < 9 MPa
d) characteristic length: > 250 mm
e) invariant point: > 1,700 °C.

## Revendications

1. Composition céramique réfractaire, contenant
a) de 75 à 98 % en masse d'au moins une matière première basique du groupe : magnésie frittée, magnésie électrofondue,
b) de 2 à 25 % en masse d'au moins un ingrédient granuleux du groupe : carbure de silicium, nitrure de silicium, oxycarbure de silicium, oxycarbonitrure de silicium,
c) au maximum 5 % en masse de composants divers, chaque fois en rapport à l'ensemble de la composition,
d) la matière première basique se présentant à raison de > 10 à de < 40 % en masse sous une fraction farineuse < 125 µm, en rapport à l'ensemble de la composition et
e) l'ingrédient granuleux se présentant sous une fraction granulométrique > 125 µm et < 2 mm.

2. Composition céramique réfractaire selon la revendication 1, dont la matière première basique se présente à raison de 35 % en masse sous la forme d'une fraction granulométrique > 1 mm, en rapport à l'ensemble de la composition.

3. Composition céramique réfractaire selon la revendication 1, dont l'ingrédient granuleux se présente sous la forme d'une fraction granulométrique > 0, 5 mm et < 2 mm.

4. Composition céramique réfractaire selon la revendication 1, dont l'ingrédient granuleux se présente dans une quantité de 2 à 10 % en masse, en rapport à l'ensemble de la composition.

5. Composition céramique réfractaire selon la revendication 1, dont la matière première basique est constituée à raison d'au moins 95 % en masse de MgO.

6. Composition céramique réfractaire selon la revendication 1, dans laquelle la valeur d₉₀ de la matière première basique granuleuse sans la fraction farineuse est supérieure à la valeur d₉₀ de l'ingrédient granuleux.

7. Composition céramique réfractaire selon la revendication 1, dont la matière première basique présente une teneur en fer, mesurée en tant que Fe₂O₃, de moins de 0,6 % en masse, en rapport à la matière première basique.

8. Composition céramique réfractaire selon la revendication 1, qui contient moins de 0,3 % en masse d'oxyde d'aluminium, en rapport à l'ensemble de la composition.

9. Composition céramique réfractaire selon la revendication 1, qui contient moins de 0,3 % en masse d'oxyde de chrome, en rapport à l'ensemble de la composition.

10. Composition céramique réfractaire selon la revendication 1, dont l'ingrédient granuleux contient au maximum 5 % en masse de composants divers, en rapport au taux massique de l'ingrédient dans l'ensemble de la composition.

11. Brique céramique réfractaire, fabriquée en une composition selon la revendication 1, après compression et cuisson à des températures comprises entre 1 400 °C et 1 600 °C, dans laquelle l'ingrédient granuleux est fritté au maximum à raison de sa moitié avec la matière première basique environnante.

12. Brique céramique réfractaire selon la revendication 11, avec au moins l'une des valeurs caractéristiques suivantes :
a) Module d'élasticité : < 60 GPa
b) Energie à la rupture : > 200 N /m
c) Résistance nominale à la traction lisse : < 9 Mpa
d) Longueur caractéristique > 250 mm
e) Point invariant > 1 700 °C.
